# EUROPEAN PATENT SPECIFICATION

(11) **EP 4 357 555 B1**
(45) Date of publication and mention of the grant of the patent: **10.09.2025**
(21) Application number: 22927598.7
(22) Date of filing: 08.11.2022
(51) Int. Cl.: E04G 21/04, B33Y 10/00, B33Y 50/02, G06F 11/30, B33Y 30/00, G06F 11/07

(54) **CONCRETE STRUCTURE 5D PRINTING METHOD AND SYSTEM**
VERFAHREN UND SYSTEM ZUM 5D-DRUCKEN EINER BETONSTRUKTUR
PROCÉDÉ ET SYSTÈME D'IMPRESSION 5D DE STRUCTURE EN BÉTON

(30) Priority: 30.08.2022 CN 202211050885
(43) Date of publication of application: 24.04.2024
(73) Proprietor: Tongji University, Shanghai 200092 (CN)
(72) Inventor: YUAN, Yong, Shanghai 200092 (CN); ZHANG, Jiaolong, Shanghai 200092 (CN); YAO, Xupeng, Shanghai 200092 (CN); SHENG, Ruyi, Shanghai 200092 (CN); WANG, Xiaoyun, Shanghai 200092 (CN)
(74) Representative: Sun, Yiming
(86) International application number: PCT/CN2022/130456
(87) International publication number: WO 2024/045331

(56) References cited:
- CN-A- 105 408 092
- CN-A- 109 057 078
- CN-A- 109 057 078
- CN-A- 109 367 002
- CN-A- 109 553 364
- CN-A- 110 682 400
- CN-A- 110 682 400
- CN-A- 110 954 442
- CN-A- 112 759 314
- CN-A- 113 063 930
- CN-A- 113 561 490
- CN-A- 113 561 490
- CN-A- 114 442 968
- JP-A- 2005 291 743
- US-A1- 2019 248 932

## Description

### TECHNICAL FIELD

The present application relates to the field of civil constructions, and in particular, to a 5D printing method and system for concrete structures.

### BACKGROUND

In the 1990s, 3D printers based on a photo-curing technology were officially introduced, marking the birth of an additive manufacturing technology (commonly known as 3D printing). According to this technology, based on a digital model file, special materials are stacked layer by layer as per a certain process using software and a numerical control system to produce a physical object. Traditional manufacturing generally follows the processing mode of removing and cutting raw materials, and assembling. However, additive manufacturing is a method for manufacturing through material accumulation "from bottom to top", which makes it possible to manufacture complex structural members that cannot be realized through the traditional manufacturing mode.

The advanced idea of additive manufacturing also attracts wide attentions in the field of civil constructions. In recent years, there have been a lot of successful cases of 3D-printed concrete building structures. And practices have proved that the construction time and construction cost are greatly saved by means of this technology, and accordingly, less energy is used, and less carbon dioxide is emitted, more importantly, the manpower is remarkably saved, and the technology is in line with the development direction of intelligent constructions. However, at present, the application of the 3D printing construction technology for concrete structures is limited to aboveground small buildings, bridges, sculptures, landscape objects, etc. with facilitating construction environments. However, engineering construction in extremely complex environments has a strong demand for intelligent construction technology which is capable of reducing manpower. Typical extremely complex environments include high rock temperature, intense cold, high water pressure, high altitude, etc. The performances of printed concrete differ a lot over time in complex environments, resulting in the problems of incompatibility of printing materials with devices, poor performances of printed structures, difficulty in quality assurance, etc. These problems have become a critical bottleneck that limits the application of the existing 3D printing technology for concrete structures to engineering construction in complex environments.

Patent applications CN 114 442 968, CN 109 057 078, CN 113 561 490 and CN 110 682 400 all related to various aspects of 3D printing are considered relevant prior art.

### SUMMARY

In order to overcome the above-mentioned defects of the 3D printing technology for concrete structures, the present application aims to provide a widely applicable 5D printing method and system for concrete structures, which breaks through the concept of 3D space based on an existing 3D coordinate axes, through adding "an environment axis" and "a time axis", introducing means for measurement, calculation and analysis, performing customized design on the concrete structure in the 5D space, and dynamically controlling construction parameters, so as to ensure smooth construction and safe service of the concrete structure in the complex 5D space.

The purposes of the present application can be achieved through the following technical solutions.

In one aspect, the present application provides a 5D printing method for a concrete structure, the method including the following steps:
1) acquiring the spatial and the environmental data of a position where the concrete structure to be printed is located;
2) simulating and analyzing, according to the spatial data and the environmental data, to obtain 5D performances of the concrete structure to be printed in space, environment and time, and designing, according to the analysis results, to obtain mix proportions of concrete and printing parameters;
3) generating a printing instruction according to the mix proportions of concrete and the printing parameters, to construct the concrete structure; and
4) collecting the spatial and the environmental data and analyzing the printed structures, to obtain 5D performances of the currently constructed concrete structure in space, environment and time, determining, based on the 5D performances, whether the concrete structure is in a safe state, where if the concrete structure is in the safe state, the printing is ended, and if the concrete structure is not in the safe, an intensive printing is performed at an unsafe part, and then step 4) is repeated.

Further, the spatial data at least includes the surface morphology of the position.

Further, the environmental data at least includes temperature and humidity.

Further, the 5D performances of the concrete structure in space, environment and time include: conditions that the obtained performances of concrete material and structure evolve under the influence of environmental factors.

Further, the intensive printing specifically includes:
designing, according to the unsafe part, to obtain mix proportions of concrete and printing parameters for intensive printing, and performing intensive printing at the unsafe part.

In another aspect, the present application provides the 5D printing system for a concrete structure, the system includes:
a measurement device, configured to collect spatial data and environmental data of a position where the concrete structure to be printed is located, and monitor to obtain 5D data of the constructed concrete structures within a period of time when a monitoring instruction is received;
a calculation and analysis device, configured to simulate and analyze, according to the spatial data and the environmental data, to obtain 5D performances of the concrete structure to be printed in space, environment and time; design, according to the analysis results, to obtain mix proportions of concrete and printing parameters; analyze, according to the 5D data monitored by the measurement device, to obtain 5D performances of the currently constructed concrete structure in space, environment and time; and determine, based on the 5D performances, whether the concrete structure is in a safe state, where if the concrete structure is in the safe state, a instruction to end printing is sent, and if the concrete structure is not in the safe state, an instruction to intensify printing for an unsafe part is sent; and
a printing device, configured to print the concrete structure according to the mix proportions of concrete and the printing parameters; end the printing when the instruction to end printing is received; and perform intensive printing when the instruction to intensify printing is received.

Further, the measurement device includes a spatial position measurement module, a temperature measurement module and a humidity measurement module.

Further, the spatial position measurement module includes a camera and a laser scanner.

Further, the calculation and analysis device includes:
a module for concrete material analysis, configured to analyze the evolution process of concrete material performances in the dimension of time according to the input data;
a module for structural hybrid analysis, configured to analyze, according to the input data and the evolution process of the concrete material analysis module, to obtain the 5D performances of the concrete structure in space, environment and time; and
a module for decision and design, configured to form a customized design of the mix proportions of concrete and the printing parameters according to the 5D performances, or determine, according to the 5D performances, whether there is an unsafe part; generate a customized design of the mix proportions of concrete and the printing parameters for intensive printing and send the instruction to intensify printing for the unsafe part if there is an unsafe part, and send the instruction to end printing if there is no unsafe part.

Further, the printing device includes a supply module for receiving the mix proportions of concrete, a mechanical movement module for receiving the printing parameters, and a pumping and extrusion module for delivering prepared concrete.

Compared with the prior art, the present application has the following beneficial effects:
1. In the present application, four dimensional data, regarding the space and the environment where the concrete structure to be printed is located are collected, the 5D performances of the concrete structure in the space, the environment and the time are analyzed, the quantitative and customized design of the concrete structure is performed, meanwhile, whether the constructed concrete structure has a dangerous part is monitored in a circulating manner, breaking through the limitations of traditional 3D physical space. In a five-dimensional space composed of special, environmental and time dimensions, the construction process is controlled automatically, the safe state of the structure is judged in real-time, and the design and printing schemes are adjusted dynamically, ensuring the smooth construction and safe service of the concrete structure in a general complex 5D space-time.
2. In the present application, additive manufacturing is performed on concrete structures, and the present application has the characteristics of wide versatility, high accuracy and high intelligence, satisfying the urgent demand of reducing manpower for engineering constructions in extremely complex environments, and creating good economic and social benefits.

### BRIEF DESCRIPTION OF THE DRAWINGS

FIG. 1 is a schematic diagram of a flow of the present application;
FIG. 2 is a schematic diagram of a measurement device of the present application;
FIG. 3 is a schematic diagram of a calculation and analysis device of the present application; and
FIG. 4 is a schematic diagram of a printing device of the present application.

### DETAILED DESCRIPTION OF THE EMBODIMENTS

The invention is defined in the independent claims. Advantageous features are described in the dependent claims.

The present application is described in detail in conjunction with the accompanying drawings and particular embodiments below. The present embodiments are implemented on the premise of the technical solution of the present application, the detailed implementation manners and the specific operation process are provided, but the scope of protection of the present application is not limited to the following embodiments.

The present application provides a 5D printing method for concrete structures, the method including the following steps:
1) acquiring spatial data and environmental data of a position where the concrete structure to be printed is located, where the spatial data at least includes the surface morphology of the position, and the environmental data at least includes temperature and humidity;
2) simulating and analyzing, according to the spatial data and the environmental data, to obtain 5D performances of the concrete structure to be printed in space, environment and time, and designing, according to the analysis results, to obtain mix proportions of concrete and printing parameters, where the 5D performances of the concrete structure in space, environment and time include: conditions that obtained performances of concrete material and structures evolve under the influence of environmental factors;
3) generating an instruction to print according to the mix proportions of concrete and the printing parameters to construct the concrete structure; and
4) collecting the spatial and the environmental data and analyzing the printed structures, to obtain 5D performances of the currently constructed concrete structure in space, environment and time, and determining, based on the 5D performances, whether the concrete structure is in a safe state, where if the concrete structure is in the safe state, the printing is ended, and if the concrete structure is not in the safe state, an intensive printing is performed at an unsafe part, and the step 4) is repeated, where the intensive printing specifically includes: designing, according to the unsafe part, to obtain mix proportions of concrete and printing parameters for intensive printing, and performing intensive printing at the unsafe part.

By means of the above-mentioned method, the quantitative and customized design of the concrete structure can be performed, the safe state of the structure can be judged in real-time, the design and printing schemes can be adjusted dynamically, ensuring the smooth construction and the safe service of the concrete structure in a general complex 5D space-time.

If the above-mentioned function is implemented in the form of a software function unit and sold or used as an independent product, it can be stored in a computer readable storage medium. On the basis of such understanding, the essential technical solution of the present application, or the part contributing to the prior art, or part of the technical solution can be embodied in the form of a software product, and the computer software product is stored in a storage medium and includes several instructions to make a computer device (which may be a personal computer, a server or a network device) perform all or part of the steps of methods in various embodiments of the present application. The foregoing storage media include: a USB flash drive, a removable hard disk, a read-only memory (ROM), a random access memory (RAM), a magnetic disk, an optical disk, or other media that can store program codes.

In addition, the above-mentioned method can be realized by means of a 5D printing system for a concrete structure, the 5D printing system including: a measurement device, configured to collect spatial data and environmental data of a position where the concrete structure to be printed is located, and monitor to obtain 5D data of spatial environmental of the constructed concrete structure within a period of time when a monitoring instruction is received; a calculation and analysis device, configured to simulate and analyze, according to the spatial data and the environmental data to obtain 5D performances of the concrete structure to be printed in space, environment and time; design, according to an analysis result, to obtain mix proportions of concrete and printing parameters; analyze, according to the 5D data monitored by the measurement device, to obtain 5D performances of the currently constructed concrete structure in space, environment and time; and determine, based on the 5D performances, whether the concrete structure is in a safe state, where if the concrete structure is in the safe state, an instruction to end printing is sent, and if the concrete structure is not in the safe state, an instruction to intensify printing for an unsafe part is sent; and a printing device, configured to print the concrete structure according to the mix proportions of concrete and the printing parameters; end the printing when the instruction to end printing is received, and perform intensive printing when the instruction to intensify printing is received.

In the particular embodiment, the measurement device may include a spatial position measurement module, a temperature measurement module and a humidity measurement module.

In the particular embodiment, the calculation and analysis device includes: a module for concrete material analysis, configured to analyze the evolution process of concrete material performances in the time dimension according to the input data; a module for structural hybrid analysis, configured to analyze, according to the input data and the evolution process of the concrete material, to obtain the 5D performances of the concrete structure in space, environment and time; and a decision design module, configured to form a customized design of the mix proportions of concrete and the printing parameters according to the 5D performances, or determine, according to the 5D performances, whether there is an unsafe part according to the 5D performances, generate a customized design of the mix proportions of concrete and the printing parameters for intensive printing and send the instruction to intensify printing for the unsafe part if there is an unsafe part, and send the instruction to end printing if there is no unsafe part.

In the particular embodiment, the printing device includes a supply module for receiving the mix proportions of concrete, a mechanical movement module for receiving the printing parameters, and a pumping and extrusion module for delivering prepared concrete.

### Embodiment

The steps of the above-mentioned method are described in detail according to the embodiment of the present application in construction of a lining structure of a high-rock-temperature tunnel.

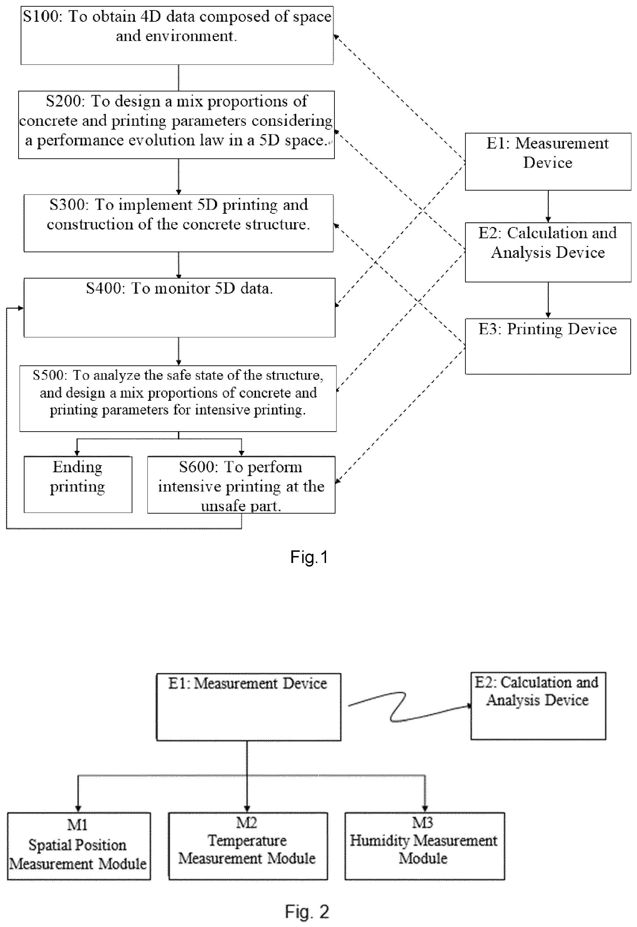

As shown in FIG. 1, the 5D printing method for the concrete structure in the preset embodiment includes the following steps:
S100: To obtain 4D data composed of space and environment.

In this step, an adopted measurement device E1 includes a spatial position measurement module M1, a temperature measurement module M2 and a humidity measurement module M3, where as shown in FIG. 2, the spatial position measurement module M1 measures the surface morphology of a wall rock by photogrammetry and laser scanning technology, with the precision of 0.01 mm; the temperature measurement module M2 measures the environment temperature inside the tunnel by infrared measurement technology, with the temperature measurement range from 0 to 100°C, and the precision of 0.1 °C ; and the humidity measurement module M3 measures the environment humidity inside the tunnel by means of a non-contact capacitor-based relative-humidity measurement sensor, with the measurement range from 0% RH to 100% RH, and the precision of 2%. The measurement data of the device are transmitted to a calculation and analysis device E2 by radio propagation technology.

S200: To design mix proportions of concrete and printing parameters considering a performance evolution law in a 5D space.

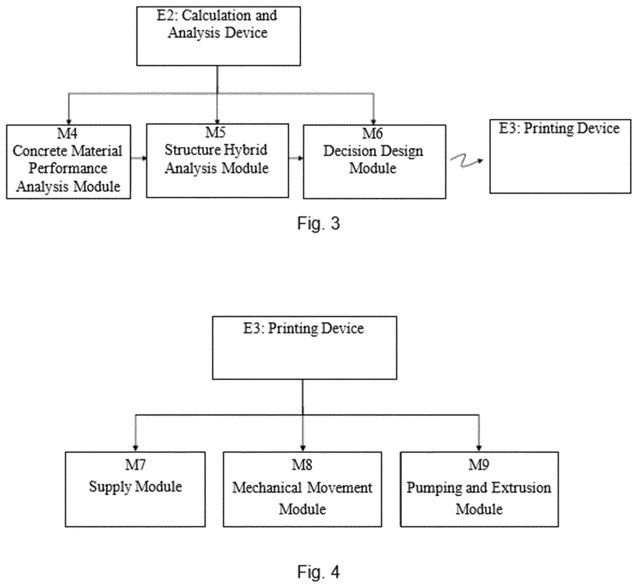

In this step, the calculation and analysis device E2 takes the 4D data, transmitted by the measurement device E1, as inputs, the calculation and analysis device E2 includes a concrete material analysis module M4, a structure hybrid analysis module M5 and a decision design module M6, as shown in FIG. 3, firstly, the evolution process of concrete material performances in the temporal dimension is analyzed on the concrete material analysis module M4, then an analysis result is provided for the structure hybrid analysis module M5, performances of the printed lining structure in the 5D space-time are analyzed, and finally, the customized design of the mix proportions of concrete and the printing parameters is formed on the decision design module M6 on the basis of an analysis result. The design parameters are sent to a printing device E3 in the form of operation instructions.

S300: To implement 5D printing and construction of the concrete structure.

In this step, the printing device E3 includes a supply module M7, a mechanical movement module M8 and a pumping and extrusion module M9, as shown in FIG. 4, the mix proportions of concrete instruction received by the printing device E3 is sent to the supply module M7 for processing, and printable concrete is prepared as per the design ratio; the instruction containing printing parameters is sent to the mechanical movement module M8 for processing, and the printing position, the thickness and the printing head movement speed are controlled as per the design; and the surface of the wall rock is smeared with the prepared concrete by means of the pumping and extrusion module M9.

S400: To monitor 5D data.

In this step, the spatial position measurement module M1, the temperature measurement module M2 and the humidity measurement module M3 of the measurement device E1 are used continuously to monitor variation data of deformation, temperature and humidity of the lining structure over time, and transmit the data to the calculation and analysis device E2 in real-time.

S500: To analyze the safe state of the structure, and design mix proportions of concrete and printing parameters for intensive printing.

In this step, the calculation and analysis device E2 takes the 5D monitoring data, transmitted by the measurement device E1, as inputs, the concrete material performances are analyzed on the concrete material analysis module M4, the stress performance of the printed lining structure is analyzed on the structure hybrid analysis module M5, finally, the safe part and the dangerous part are determined on the module for decision and design M6, the design of the mix proportions of concrete and the printing parameters for intensive printing is performed for the unsafe part, and a result is transmitted to the printing device E3 again in the form of an operation instruction.

S600: To perform intensive printing at the dangerous part.

In this step, the mix proportions of concrete instruction received by the printing device E3 is sent to the supply module M7 for processing, and the printable concrete is prepared as per the design ratio; the printing parameter instruction is sent to the mechanical movement module M8 for processing, and the printing position, the thickness and the printing head movement speed are controlled as per the design; and the part requiring intensive printing is smeared with the prepared concrete by means of the pumping and extrusion module M9.

S400, S500 and S600 are repeated until no dangerous part exists in the lining structure.

The preferred specific embodiments of the present application are described in detail above. It should be understood that those of ordinary skill in the art can make many modifications and changes according to the concept of the present application without involving any inventive effort. Therefore, all technical solutions that can be obtained by those skilled in the art through logical analysis, reasoning or limited experiments on the basis of the prior art according to the concept of the present application should fall within the scope of protection of the claims.

## Claims

1. A 5D printing method for a concrete structure applying 3D coordinate axes, an environment axis and a time axis, the method comprising the following steps:
1) acquiring spatial data and environmental data of a position where a concrete structure to be printed is located;
2) simulating and analyzing, according to the spatial data and the environmental data, the concrete structure to be printed in space, environment, and time, obtaining 5D performances of the concrete structure to be printed in space, environment and time, and defining, according to the 5D performances, mix proportions of concrete and printing parameters;
3) generating an instruction to print according to the mix proportions of concrete and the printing parameters to construct the concrete structure; and
4) collecting the spatial and the environmental data and analyzing the currently constructed concrete structure, obtaining 5D performances of the currently constructed concrete structure in space, environment and time, the 5D performances of the currently constructed concrete structure comprising 5D performances of concrete material and structure evolved under the influence of environmental factors, and determining, based on the 5D performances, whether the concrete structure is in a safe state, wherein if the concrete structure is in the safe state, the method is ended, and if the concrete structure is not in the safe state by including an unsafe part, an intensive printing is performed at the unsafe part, and step 4) is repeated.

2. The method according to claim 1, wherein the spatial data at least comprises a surface morphology of the position.

3. The method according to claim 1, wherein the environmental data at least comprises temperature and humidity.

4. The method according to claim 1, wherein the intensive printing specifically comprises:
defining, according to the unsafe part, mix proportions of concrete and printing parameters for intensive printing, and performing intensive printing at the unsafe part.

5. A 5D printing system for concrete structures applying 3D coordinate axes, an environment axis and a time axis, the system comprising:
a measurement device (E1), configured to acquire spatial data and environmental data of a position where the concrete structure to be printed is located, and monitor to obtain 5D data of a spatial environment of the constructed concrete structure within a period of time when a monitoring instruction is received;
a calculation and analysis device (E2), configured to simulate and analyze, according to the spatial data and the environmental data, the concrete structure to be printed in space, environment, and time, to obtain 5D performances of the concrete structure to be printed in space, environment and time; to define, according to the 5D performances, mix proportions of concrete and printing parameters; analyze, according to the 5D data monitored by the measurement device (E1), the currently constructed concrete structure to obtain 5D performances of the currently constructed concrete structure in space, environment and time, the 5D performances of the currently constructed concrete structure comprising 5D performances of concrete material and structure evolved under the influence of environmental factors; determine, based on the 5D performances, whether the concrete structure is in a safe state, wherein if the concrete structure is in the safe state, an instruction to end printing is sent, and if the concrete structure is not in the safe state by including an unsafe part, an instruction to intensify printing at the unsafe part is sent; and
a printing device (E3), configured to print the concrete structure according to the mix proportions of concrete and the printing parameters; end the printing when the instruction to end printing is received; and perform intensive printing when the instruction to intensify printing is received.

6. The system according to claim 5, wherein the measurement device (E1) comprises a spatial position measurement module (M1), a temperature measurement module (M2) and a humidity measurement module (M3).

7. The system according to claim 6, wherein the spatial position measurement module (M1) comprises a camera and a laser scanner.

8. The system according to claim 5, wherein the calculation and analysis device (E2) comprises:
a module for concrete material analysis (M4), configured to analyze an evolution process of concrete material performances in the time dimension according to input data;
a module for structural hybrid analysis (M5), configured to analyze the input data and the evolution process of the concrete material, to obtain the 5D performances of the concrete structure in space, environment and time; and
a module for decision and definition (M6), configured to form a customized definition of the mix proportions of concrete and the printing parameters according to the 5D performances, and determine, according to the 5D performances, whether there is an unsafe part; generate a customized definition of the mix proportions of concrete and the printing parameters for intensive printing and send the instruction to intensify printing for the unsafe part if there is an unsafe part, and send the instruction to end printing if there is no unsafe part.

9. The system according to claim 5 or claim 7, wherein the printing device (E3) comprises a supply module (M7) for receiving the mix proportions of concrete, a mechanical movement module (M8) for receiving the printing parameters, and a pumping and extrusion module (M9) for delivering prepared concrete.

## Patentansprüche

1. Ein 50-Druckverfahren für eine Betonstruktur unter Anwendung von 3D-Koordinatenachsen, einer Umgebungsachse und einer Zeitachse, wobei das Verfahren folgende Schritte umfasst:
1) Erfassen von Raumdaten und Umweltdaten einer Position, an der sich eine zu druckende Betonstruktur befindet;
2) Simulieren und Analysieren der zu druckenden Betonstruktur im Raum, in der Umgebung und in der Zeit gemäß den Raumdaten und den Umweltdaten, Ermitteln der 5D-Leistungen der zu druckenden Betonstruktur im Raum, in der Umgebung und in der Zeit und Festlegen von Betonmischungsverhältnissen und Druckparametern gemäß den 5D-Leistungen;
3) Erzeugen eines Druckbefehls gemäß den Betonmischungsverhältnissen und den Druckparametern zum Aufbau der Betonstruktur; und
4) Erfassen der Raum- und Umweltdaten und Analysieren der aktuell errichteten Betonstruktur, Ermitteln der 5D-Leistungen der aktuell errichteten Betonstruktur im Raum, in der Umgebung und in der Zeit, wobei die 5D-Leistungen der aktuell errichteten Betonstruktur 5D-Leistungen des Betonmaterials und der Struktur umfassen, die sich unter dem Einfluss von Umweltfaktoren entwickelt haben, und Bestimmen, ob sich die Betonstruktur basierend auf den 5D-Leistungen in einem sicheren Zustand befindet, wobei, wenn sich die Betonstruktur in einem sicheren Zustand befindet, das Verfahren beendet wird, und wenn sich die Betonstruktur nicht in einem sicheren Zustand befindet, da sie einen unsicheren Bereich aufweist, an dem unsicheren Bereich ein intensiver Druckvorgang durchgeführt und Schritt 4) wiederholt wird.

2. Das Verfahren nach Anspruch 1, wobei die Raumdaten mindestens eine Oberflächenmorphologie der Position umfassen.

3. Das Verfahren nach Anspruch 1, wobei die Umweltdaten mindestens Temperatur und Luftfeuchtigkeit umfassen.

4. Das Verfahren nach Anspruch 1, wobei der intensive Druckvorgang insbesondere Folgendes umfasst:
Festlegen von Betonmischungsverhältnissen und Druckparametern für den intensiven Druckvorgang entsprechend dem unsicheren Bereich und Durchführen des intensiven Druckvorgangs an dem unsicheren Bereich.

5. Ein 5D-Drucksystem für Betonstrukturen unter Anwendung von 3D-Koordinatenachsen, einer Umgebungsachse und einer Zeitachse, wobei das System Folgendes umfasst:
eine Messeinrichtung (E1), die dazu eingerichtet ist, Raumdaten und Umweltdaten einer Position zu erfassen, an der sich die zu druckende Betonstruktur befindet, und die dazu eingerichtet ist, 5D-Daten der Raumumgebung der errichteten Betonstruktur innerhalb eines Zeitraums nach Erhalt eines Überwachungsbefehls zu überwachen;
eine Berechnungs- und Analysevorrichtung (E2), die dazu eingerichtet ist, die zu druckende Betonstruktur im Raum, in der Umgebung und in der Zeit gemäß den Raumdaten und den Umweltdaten zu simulieren und zu analysieren, um die 5D-Leistungen der zu druckenden Betonstruktur im Raum, in der Umgebung und in der Zeit zu ermitteln; die Betonmischungsverhältnisse und Druckparameter gemäß den 5D-Leistungen festzulegen; die aktuell errichtete Betonstruktur gemäß den durch die Messeinrichtung (E1) überwachten 5D-Daten zu analysieren, um die 5D-Leistungen der aktuell errichteten Betonstruktur im Raum, in der Umgebung und in der Zeit zu ermitteln, wobei die 5D-Leistungen der aktuell errichteten Betonstruktur 5D-Leistungen des Betonmaterials und der Struktur umfassen, die sich unter dem Einfluss von Umweltfaktoren entwickelt haben; zu bestimmen, ob sich die Betonstruktur basierend auf den 5D-Leistungen in einem sicheren Zustand befindet, wobei, wenn sich die Betonstruktur in einem sicheren Zustand befindet, ein Befehl zum Beenden des Druckvorgangs gesendet wird, und wenn sich die Betonstruktur nicht in einem sicheren Zustand befindet, da sie einen unsicheren Bereich aufweist, ein Befehl zum Verstärken des Druckvorgangs an dem unsicheren Bereich gesendet wird; und
eine Druckvorrichtung (E3), die dazu eingerichtet ist, die Betonstruktur gemäß den Betonmischungsverhältnissen und den Druckparametern zu drucken; den Druckvorgang zu beenden, wenn der Befehl zum Beenden des Druckvorgangs empfangen wird; und einen intensiven Druckvorgang durchzuführen, wenn der Befehl zum Verstärken des Druckvorgangs empfangen wird.

6. Das System nach Anspruch 5, wobei die Messeinrichtung (E1) ein Modul (M1) zur Messung der räumlichen Position, ein Modul (M2) zur Temperaturmessung und ein Modul (M3) zur Feuchtigkeitsmessung umfasst.

7. Das System nach Anspruch 6, wobei das Modul (M1) zur Messung der räumlichen Position eine Kamera und einen Laserscanner umfasst.

8. Das System nach Anspruch 5, wobei die Berechnungs- und Analysevorrichtung (E2) Folgendes umfasst:
ein Modul (M4) zur Analyse von Betonmaterial, das dazu eingerichtet ist, einen Entwicklungsprozess von Betonmaterialeigenschaften in der Zeitdimension gemäß eingegebenen Daten zu analysieren;
ein Modul (M5) zur hybriden Strukturanalyse, das dazu eingerichtet ist, die eingegebenen Daten und den Entwicklungsprozess des Betonmaterials zu analysieren, um die 5D-Leistungen der Betonstruktur im Raum, in der Umgebung und in der Zeit zu ermitteln; und
ein Modul (M6) zur Entscheidung und Festlegung, das dazu eingerichtet ist, eine benutzerdefinierte Festlegung der Betonmischungsverhältnisse und Druckparameter gemäß den 5D-Leistungen zu bilden und zu bestimmen, ob ein unsicherer Bereich vorhanden ist; eine benutzerdefinierte Festlegung der Betonmischungsverhältnisse und Druckparameter für den intensiven Druckvorgang zu erzeugen und den Befehl zum Verstärken des Druckvorgangs für den unsicheren Bereich zu senden, wenn ein unsicherer Bereich vorhanden ist, und den Befehl zum Beenden des Druckvorgangs zu senden, wenn kein unsicherer Bereich vorhanden ist.

9. Das System nach Anspruch 5 oder Anspruch 7, wobei die Druckvorrichtung (E3) ein Zuführmodul (M7) zum Empfangen der Betonmischungsverhältnisse, ein mechanisches Bewegungsmodul (M8) zum Empfangen der Druckparameter und ein Pump- und Extrusionsmodul (M9) zur Förderung des vorbereiteten Betons umfasst.

## Revendications

1. Procédé d'impression 5D pour une structure en béton appliquant des axes de coordonnées 3D, un axe environnemental et un axe temporel, le procédé comprenant les étapes suivantes :
1) acquérir des données spatiales et des données environnementales d'un emplacement où se situe la structure en béton à imprimer ;
2) simuler et analyser, en fonction des données spatiales et des données environnementales, la structure en béton à imprimer dans l'espace, l'environnement et le temps, obtenir les performances 5D de la structure à imprimer dans l'espace, l'environnement et le temps, et définir, en fonction des performances 5D, des proportions de mélange du béton et des paramètres d'impression ;
3) générer une instruction d'impression selon les proportions de mélange du béton et les paramètres d'impression pour construire la structure en béton ; et
4) collecter les données spatiales et environnementales et analyser la structure en béton actuellement construite, obtenir les performances 5D de cette dernière dans l'espace, l'environnement et le temps, les performances 5D de la structure en béton construite comprenant les performances 5D du matériau béton et de la structure évoluées sous l'influence de facteurs environnementaux, et déterminer, sur la base des performances 5D, si la structure en béton est dans un état sûr, et dans le cas où la structure en béton est dans un état sûr, le procédé est terminé, et dans le cas où la structure en béton n'est pas dans un état sûr en raison d'une partie non sûre, une impression intensive est effectuée à ladite partie non sûre, et l'étape 4) est répétée.

2. Le procédé selon la revendication 1, dans lequel les données spatiales comprennent au moins la morphologie de surface de l'emplacement.

3. Le procédé selon la revendication 1, dans lequel les données environnementales comprennent au moins la température et l'humidité.

4. Le procédé selon la revendication 1, dans lequel l'impression intensive comprend spécifiquement :
définir, en fonction de la partie non sûre, des proportions de mélange du béton et des paramètres d'impression pour l'impression intensive, et effectuer l'impression intensive à ladite partie non sûre.

5. Système d'impression 5D pour des structures en béton appliquant des axes de coordonnées 3D, un axe environnemental et un axe temporel, le système comprenant :
un dispositif de mesure (E1), configuré pour acquérir des données spatiales et environnementales d'un emplacement où se situe la structure en béton à imprimer, et surveiller afin d'obtenir des données 5D de l'environnement spatial de la structure en béton construite pendant une période après réception d'une instruction de surveillance ;
un dispositif de calcul et d'analyse (E2), configuré pour simuler et analyser, en fonction des données spatiales et environnementales, la structure en béton à imprimer dans l'espace, l'environnement et le temps, afin d'obtenir les performances 5D de la structure à imprimer dans l'espace, l'environnement et le temps ; définir, en fonction des performances 5D, les proportions de mélange du béton et les paramètres d'impression ; analyser, en fonction des données 5D surveillées par le dispositif de mesure (E1), la structure en béton actuellement construite afin d'en obtenir les performances 5D dans l'espace, l'environnement et le temps, les performances 5D de la structure en béton actuellement construite comprenant les performances 5D du matériau béton et de la structure évoluées sous l'influence de facteurs environnementaux; déterminer, sur la base des performances 5D, si la structure en béton est dans un état sûr, et dans le cas où elle l'est, envoyer une instruction de fin d'impression, et dans le cas contraire, envoyer une instruction d'impression intensive à la partie non sûre ; et
un dispositif d'impression (E3), configuré pour imprimer la structure en béton selon les proportions de mélange du béton et les paramètres d'impression ; arrêter l'impression lorsqu'une instruction de fin d'impression est reçue ; et effectuer une impression intensive lorsqu'une instruction d'intensification d'impression est reçue.

6. Le système selon la revendication 5, dans lequel le dispositif de mesure (E1) comprend un module de mesure de position spatiale (M1), un module de mesure de température (M2) et un module de mesure d'humidité (M3).

7. Le système selon la revendication 6, dans lequel le module de mesure de position spatiale (M1) comprend une caméra et un scanner laser.

8. Le système selon la revendication 5, dans lequel le dispositif de calcul et d'analyse (E2) comprend :
un module (M4) d'analyse du matériau béton, configuré pour analyser un processus d'évolution des performances du béton dans la dimension temporelle en fonction des données d'entrée ;
un module (M5) d'analyse hybride structurelle, configuré pour analyser les données d'entrée et le processus d'évolution du béton, afin d'obtenir les performances 5D de la structure en béton dans l'espace, l'environnement et le temps ; et
un module (M6) de décision et de définition, configuré pour générer une définition personnalisée des proportions de mélange du béton et des paramètres d'impression en fonction des performances 5D, et déterminer, selon les performances 5D, s'il existe une partie non sûre ; générer une définition personnalisée des proportions de mélange du béton et des paramètres d'impression pour une impression intensive et envoyer une instruction d'impression intensive pour la partie non sûre s'il existe une partie non sûre, et envoyer l'instruction de terminer l'impression s'il existe aucune partie non sûre.

9. Le système selon la revendication 5 ou la revendication 7, dans lequel le dispositif d'impression (E3) comprend un module (M7) d'alimentation pour recevoir les proportions de mélange du béton, un module (M8) de mouvement mécanique pour recevoir les paramètres d'impression, et un module (M9) de pompage et d'extrusion pour acheminer le béton préparé.
